# EUROPÄISCHE PATENTSCHRIFT

(11) **EP 3 498 636 B1**
(45) Veröffentlichungstag und Bekanntmachung des Hinweises auf die Patenterteilung: **22.02.2023**
(21) Anmeldenummer: 18199238.9
(22) Anmeldetag: 09.10.2018
(51) Int. Cl.: B65G 47/26, B27N 3/22, B65G 47/28, B65G 47/31, B65G 57/11, B65H 29/66, B65H 33/06

(54) **TRANSPORTANORDNUNG FÜR HOLZFASERPLATTEN UND VERFAHREN ZUM TRANSPORTIEREN VON HOLZFASERPLATTEN**
TRANSPORT ASSEMBLY FOR WOODEN FIBRE PLATE AND A METHOD FOR TRANSPORTING WOODEN FIBRE PLATES
DISPOSITIF DE TRANSPORT POUR PANNEAUX DE FIBRES DE BOIS ET PROCÉDÉ DE TRANSPORT DE PANNEAUX DE FIBRES DE BOIS

(30) Priorität: 15.12.2017 DE 102017011660
(43) Veröffentlichungstag der Anmeldung: 19.06.2019
(73) Patentinhaber: Siempelkamp Maschinen- und Anlagenbau GmbH, 47803 Krefeld (DE)
(72) Erfinder: Vaeßen, Michael, 41462 Neuss (DE); Krause, Jürgen, 82110 Germering (DE); Maier, Ulrich, 40221 Düsseldorf (DE); Friedrich, David, 40880 Ratingen (DE); Von Afferden, Achim, 47906 Kempen (DE); Buschmann, Adalbert, 47179 Duisburg (DE)
(74) Vertreter: Andrejewski - Honke Patent- und Rechtsanwälte Partnerschaft mbB

(56) Entgegenhaltungen:
- EP-A1- 0 520 945
- EP-A2- 0 107 645
- DE-A1- 3 612 021
- DE-A1- 4 311 519
- DE-U1-202006 018 443

## Beschreibung

Die Erfindung betrifft eine Transportanordnung für Holzfaserplatten mit zumindest einer ersten Transportvorrichtung für den liegenden Transport von teilweise übereinanderliegenden Holzfaserplatten über eine Transportstrecke S in einer ersten Transporthöhe T1, und einer Stapelposition für Holzfaserplatten in Transportrichtung hinter der ersten Transportvorrichtung.

Die Erfindung betrifft ferner ein Verfahren zum Transportieren von teilweise übereinanderliegenden Holzfaserplatten auf zumindest einer ersten Transportvorrichtung über eine Transportstrecke S in einer ersten Transporthöhe T1 und Zuführen der einzelnen Holzfaserplatten zu einer Stapelposition.

Unter Holzwerkstoffplatten seien beispielhaft Spanplatten, OSB-Platten, Leichtbauplatten, Mehrschichtplatten, HDF- oder MDF-Platten genannt.

Als Transportvorrichtung werden in erster Linie umlaufende Transportbänder verstanden, von denen auch mehrere parallel nebeneinander laufen können, aber auch angetriebene Transportrollen oder Schienentransport sind im Rahmen dieser Erfindung nicht ausgeschlossen.

Die Herstellung der Holzfaserplatten geschieht in der Regel so, dass streufähiges Gut (im Wesentlichen beleimte Holzspäne) auf ein Transportband als Holzwerkstoffmatte gestreut wird. Diese Holzwerkstoffmatten können Dicken von wenigen Millimetern bis zu einem Meter aufweisen. Die Streustationen sind heutzutage in der Lage sowohl in Förderrichtung des Transportbandes als auch in Querrichtung die Streumenge über eine oder mehrere hintereinandergeschaltete dosierverstellbare Streustationen zu variieren. Mehrere hintereinandergeschaltete Streustationen ermöglichen die Bildung unterschiedlicher Schichten, beispielsweise Deck- und Mittelschichten. Das Transportband leitet die Holzwerkstoffmatte weiter zu einer Presse. Diese Presse zur Beaufschlagung der über das Transportband in einer Förderrichtung zugeführten Holzwerkstoffmatte mit Druck und Wärme wird in der Regel durch eine Doppelbandpresse realisiert. Das fertige Produkt ist ein Plattenstrang, der in Holzwerkstoffplatten zersägt wird.

Diese Holzwerkstoffplatten werden häufig weiteren Bearbeitungs- bzw. Behandlungsstationen zugeführt. Sie können beispielsweise vermessen, sortiert, geschliffen, gekühlt, getrocknet oder versiegelt werden. Diese Prozesse benötigen häufig einen gewissen zeitlichen Spielraum, so dass eine kontinuierliche gleichmäßige Zufuhr nicht möglich ist.

Die Holzwerkstoffplatten sind in der Regel sehr heiß, wenn sie aus der Presse kommen und auch noch nach dem Schnitt. Zum Abstapeln der Holzwerkstoffplatten müssen sie sich aber unterhalb einer von der Holzart und den Plattendimensionen abhängigen Grenztemperatur sein. Das bedeutet, dass die Holzfaserplatten abkühlen müssen. Das geschieht vielfach während des Transports. Um die Transportstrecke bis zu einer Stapelposition möglichst kurz zu halten, werden die Platten nach dem Schneiden teilweise übereinander gelegt, was eine geringere Transportgeschwindigkeit erlaubt, als die, mit der der Plattenstrang aus der Presse kommt.

Der Stand der Technik kennt die Vorgänge der Stapelbildung und des Stapeltransports, sowie die "Schuppung" oder die "Entschuppung" der Holzfaserplatten, was so viel bedeutet wie den Transport mit zumindest teilweise übereinanderliegenden Holzfaserplatten oder den die Holzfaserplatten auf Abstand haltenden Einzeltransport. Hierzu seien die Gebrauchsmuster DE202006018443U1 und DE202007001451U1 genannt. In diesen Veröffentlichungen ist man darauf bedacht, zu große Beanspruchungen auf die Holzfaserplatten bei der Bildung von Stapeln oder Schuppen und zu große und schädliche Friktionen der Holzplatten bei der Auflösung der Schuppung in Grenzen zu halten. DE202006018443U1 offenbart den Oberbegriff des Anspruchs 1 und den Oberbegriff des Anspruchs 8.

Das wird aber nur teilweise erreicht. Denn für die Stapelbildung werden die Holzfaserplatten aufeinander verschoben. Und auch die Entschuppung ist ohne möglicherweise die Holzfaserplatte verkratzende Friktion nicht möglich.

Ferner ist es problematisch, wenn nach der Erzeugung eines Plattenstapels dieser entfernt werden soll, die Holzfaserplatten aber kontinuierlich weiter zugeführt werden.

Es ist die Aufgabe der Erfindung, den Transport von Holzfaserplatten bei anschließender Stapelbildung zu vereinfachen und die Holzfaserplatten dabei nur geringer Friktion auszusetzen.

Die Aufgabe wird hinsichtlich der Transportanordnung für Holzfaserplatten durch die Merkmale des Anspruchs 1 und dadurch gelöst, dass wenigstens eine zweite Transportvorrichtung (3) vorgesehen ist, die geeignet ist, innerhalb der Transportstrecke S der ersten Transportvorrichtung Holzfaserplatten auf einer zweiten Transporthöhe T2 zu transportieren.

Dadurch dass sich der Transport von Holzfaserplatten in der Transportstrecke S auf zwei unterschiedlichen Niveaus abspielt, hat man die Möglichkeit die teilweise übereinanderliegenden Platten ohne Friktion voneinander zu trennen.

Mit Vorteil ist dabei dafür gesorgt, dass die erste Transportvorrichtung und die zweite Transportvorrichtung mit unterschiedlichen Transportgeschwindigkeiten betreibbar sind.

So kann nach der Trennung zweier Platten in der Höhe, eine der Platten verzögert oder beschleunigt transportiert werden. Damit wird auf einfache Weise in Transportrichtung ein Abstand zwischen zwei Holzfaserplatten herstellbar, indem eine der Platten auf einem anderen Höhenniveau als die andere schneller bewegt wird und somit ein Stück voreilt. Auf einer folgenden Transportvorrichtung können die Platten dann mit konstantem Abstand in einer etwas höheren Geschwindigkeit als der vor der ersten und der zweiten Transportvorrichtung weitertransportiert werden.

Vorzugsweise weist die erste Transportvorrichtung und/oder die zweite Transportvorrichtung wenigstens ein umlaufendes Transportband auf. Und besonders bevorzugt weisen die erste Transportvorrichtung wenigstens ein umlaufendes Transportband und die zweite Transportvorrichtung wenigstens ein umlaufendes Transportband auf, die nebeneinander angeordnet sind.

Es besteht dadurch die Möglichkeit mit zwei einfachen, ggf. angetriebenen Umlenkwalzen ein Transportband aufzubauen. Eine solche Transportvorrichtung ist preiswert und besonders gut geeignet, um liegende Platten zu transportieren.

Erfindungsgemäß weist die zweite Transportvorrichtung Tragelemente auf. Über Tragelemente lässt sich ein Höhenunterschied der transportierten Platten erzielen. Wenn sich diese beispielsweise auf den umlaufenden Transportbändern befinden, können sie bei einem Start des Bandes im rechten Augenblick eine Holzfaserplatte tragend anheben.

Erfindungsgemäß sind die Tragelemente auf einem Teilstück der Transportstrecke S aktivierbar, z. B. indem sie auf dem Teilumfang wenigstens eines Transportbandes angebracht sind.

So können die Tragelemente, die sich vorher auf der dem Plattentransport gegenüberliegenden Seite einer der beiden Transportvorrichtungen befanden, durch einen Anlauf des Bandes auf dem sie angebracht sind, aktiviert werden und eine Holzfaserplatte auf einem höheren Niveau transportieren, als die andere parallele Transportvorrichtung. Entsprechend werden die Tragelemente, wenn sie wieder auf der Unterseite der Transportvorrichtung angekommen sind, automatisch deaktiviert und die Holzfaserplatte wird wieder auf der ursprünglichen Transporthöhe vorwärts bewegt. Zur Unterscheidung wird die normale Transporthöhe T1 genannt und die mit der zweiten Fördereinrichtung erzielte Förderhöhe T2.

Bevorzugt ist eine Steuer- oder Regelvorrichtung vorgesehen, mit der die Transportgeschwindigkeit (V1) der ersten Transportvorrichtung und die Transportgeschwindigkeit (V2) der zweiten Transportvorrichtung einstellbar sind.

Die gleiche Steuer- oder Regelvorrichtung sollte auch vorgesehen sein, um dafür zu sorgen, dass die Einstellung der Transportgeschwindigkeiten (V1, V2) und/oder die Aktivierung der Tragelemente in Abhängigkeit von zu erzeugenden Zwischenräumen zwischen den Holzfaserplatten einstellbar sind.

Hierzu können verschiedene einzustellende Werte in einem Speicher abgelegt sein, so dass die Steuerung aufgrund der Dicke und der Länge der Holzfaserplatte, der in die erste Transportvorrichtung einlaufenden Plattengeschwindigkeit, der Aktivierung der Tragelemente erfolgen kann. Sinnvoll ist die Steuerung verständlicherweise besonders, wenn die augenblicklichen Zustandsgrößen über Messeinrichtungen erfassbar sind. Der Vorgang wird dann auf der Transportstrecke S umgesetzt.

Hinsichtlich des Verfahrens zum Transportieren von teilweise übereinanderliegenden Holzfaserplatten wird die Aufgabe der Erfindung durch die Merkmale des Anspruchs 8 und insbesondere dadurch gelöst, dass eine oder mehrere Holzfaserplatten innerhalb der Transportstrecke S der ersten Transportvorrichtung von einer zweiten Transportvorrichtung auf einer Transporthöhe T2 getragen werden.

Die Vorteile dieses Verfahrens sind bereits bei der Beschreibung der Vorrichtung erläutert worden.

So umfasst das Verfahren in abhängigen Ansprüchen, dass
- die erste Transportvorrichtung und die zweite Transportvorrichtung mit unterschiedlichen Transportgeschwindigkeiten betrieben werden,
- die unterschiedlichen Transportgeschwindigkeiten (V1, V2) einen Abstand zwischen zwei aufeinanderfolgenden, vormals teilweise übereinanderliegenden Holzfaserplatten erzeugen,
- die Geschwindigkeitsdifferenz aufgrund eines Längenmaßes und/oder der Überlappung zweier Holzfaserplatten eingestellt wird und
- die Einstellung aufgrund von in einer Steuerung hinterlegter Daten und Abhängigkeiten von Transportgeschwindigkeit und Plattenlänge erfolgt.

Verfahrensmäßig ist es zudem vorteilhaft, wenn eine Leiteinrichtung für Holzfaserplatten in den erzeugten Abstand zwischen zwei Holzfaserplatten einfährt.

Dies erlaubt ein Umleiten der kontinuierlichen Plattenzufuhr, wenn beispielsweise ein inzwischen aufgefüllter Plattenstapel abtransportiert werden muss oder wenn eine Ausschussplatte weggeschafft werden soll.

Die Erfindung wird im Folgenden unter Bezugnahme auf die Zeichnungen näher erläutert.

### Dabei zeigen

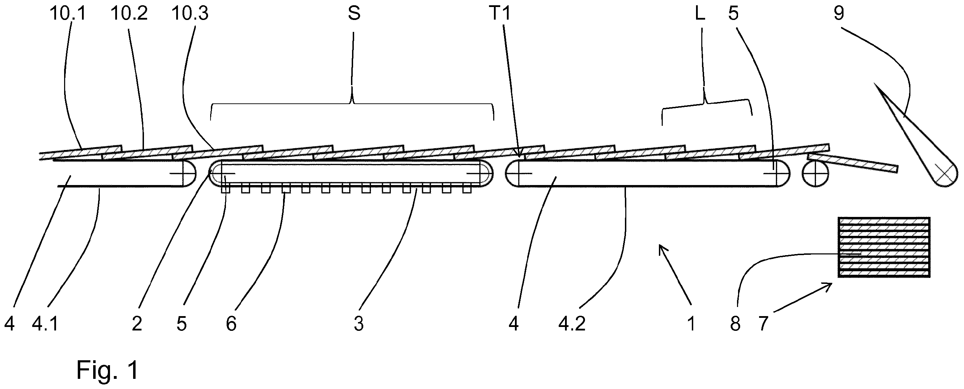

die drei Figuren Fig. 1 und Fig. 2 und Fig. 3 eine schematische, teilweise geschnittene Darstellung der erfindungsgemäßen Transportanordnung zu drei zeitlich versetzten Zeitpunkten und

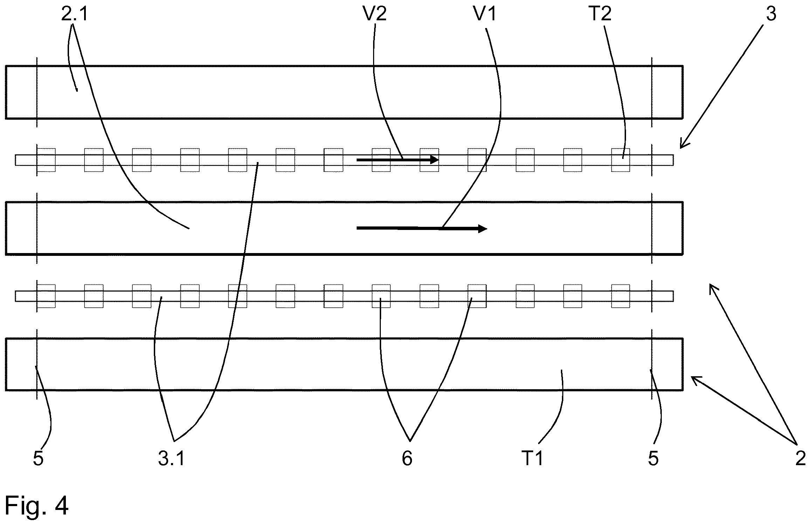

Fig. 4 eine schematische Draufsicht der ersten und zweiten Transportvorrichtungen.

Fig. 1 zeigt eine Transportanordnung 1 mit einer ersten Transportvorrichtung 2 und einer zweiten Transportvorrichtung 3. Beide Transportvorrichtungen sind in diesem Ausführungsbeispiel durch ein oder mehrere nebeneinander angeordnete Transportbänder gebildet, die um in der Regel angetriebene, hier nur durch ihre Drehachse symbolisierte Umlenkwalzen 5 umlaufen.

Zu dem dargestellten Zeitpunkt der Fig. 1 werden Holzfaserplatten 10.1, 10.2, 10.3 mit einer Länge L auf der Transportvorrichtung 2 transportiert. Alle Holzfaserplatten 10.1, 10.2, 10.3 liegen teilweise übereinander, was man auch als "geschuppt" bezeichnet. Das hat als Grund, dass die Transportanordnung 1 langsamer laufen kann, als die Holzfaserplatten beispielsweise aus der nicht dargestellten Presse kommen, damit die Platten vor der Stapelposition 7 besser abkühlen können. Beispielhaft werden die Holzfaserplatten 10.1, 10.2 und 10.3 von einer vorgeschalteten Transporteinrichtung 4 gerade an die erste Transportvorrichtung 2 mit der Transportstrecke S übergeben, wobei die Holzfaserplatte 10.3 sich bereits auf dem Förderband der ersten Transportvorrichtung 2 abstützt. Alle Transportvorrichtungen 2, 3, 4 fördern auf dem gleichen Transport-Höhenniveau T1. In diesem Beispiel nutzen die Fördereinrichtungen 2, 3, 4 Förderbänder 2.1, 3.1, 4.1, 4.2, wobei auf die Förderbänder 2.1 und 3.1 bei der Beschreibung der Fig. 4 noch näher eingegangen wird. Gegen Ende der Transportanordnung 1 ist eine Stapelposition 7 vorgesehen, in der der die geförderten Holzfaserplatten 10.x zu einem Stapel 8 abgelegt werden. Auf die Darstellung von bekannten Leitelementen, die dazu dienen, dass die Platten exakt deckend übereinander gestapelt werden, ist aus Gründen der Übersichtlichkeit verzichtet worden.

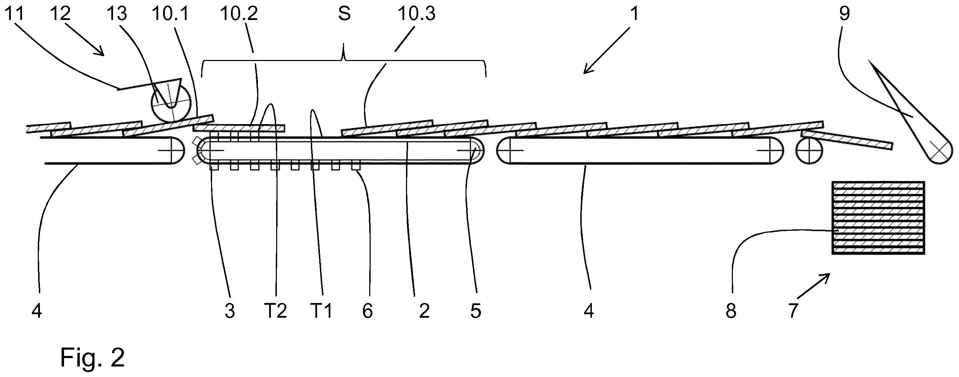

In Fig. 2 ist die Phase erreicht, in der die sich bereits in der Transportstrecke S befindliche Holzfaserplatte 10.2 über die aktivierten Tragelemente 6 auf ein höheres Transportniveau T2 angehoben wird. Dies ist möglich, weil die Tragelemente 6 durch Vorlauf der Tragvorrichtung 3 unter die Holzfaserplatte 10.2 gebracht wurden. Die Holzfaserplatte 10.2 wird dadurch angehoben und allein mit der Transportvorrichtung 3 transportiert. Damit die nachfolgende und noch aufliegende Holzfaserplatte 10.1 bei dieser Aktion nicht verrutscht, wirkt eine Andruckvorrichtung 12 von oben auf die Platte, die in diesem Beispiel durch einen angedeuteten Hebel 11 und eine Andruckrolle 13 dargestellt ist.

Die Transportvorrichtung 2 und die Transportvorrichtung 3 sind nun auf unterschiedliche Transportgeschwindigkeiten V1 und V2 einstellbar. Dadurch dass man innerhalb der Transportstrecke S die Holzfaserplatte 10.2 auf der zweiten Transportvorrichtung 3 langsamer laufen lassen kann als die Holzfaserplatte 10.3 auf der ersten Transportvorrichtung 2, kann ein Abstand in Förderrichtung zwischen der Holzfaserplatte 10.2 und der Holzfaserplatte 10.3 geschaffen werden.

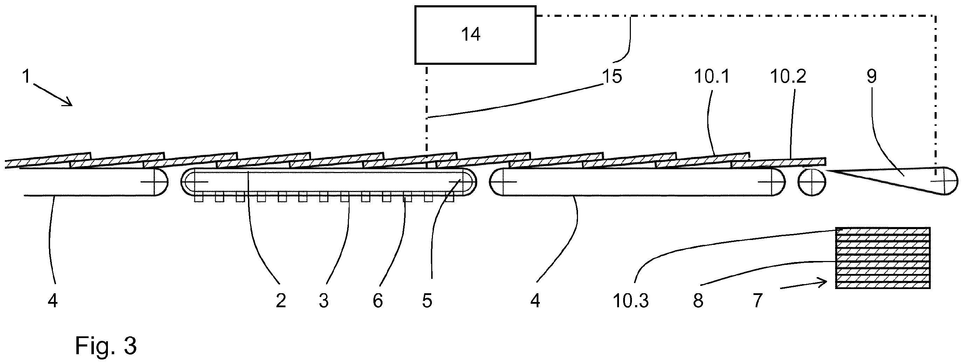

Dieser Anstand und die dadurch gebildete Lücke zwischen den Holzfaserplatten 10.2 und 10.3 sind notwendig, um einen fertigen Stapel 8 wechseln zu können. Fig. 3 zeigt, wie eine Leiteinrichtung 9 in die Lücke eingeschwenkt wird und die nachfolgenden Platten, hier beispielhaft 10.1 und 10.2 über den Stapel 8 hinweg weitergeleitet werden, beispielsweise zu einer weiteren Stapelposition. Dabei sind die Tragelemente 6 der zweiten Transportvorrichtung 3 wieder deaktiviert, so dass alle nachfolgenden Platten wieder geschuppt auch gleichem Transportniveau T1 angeliefert werden.

Fig. 3. deutet im Übrigen noch an, dass eine Steuer- oder Regelvorrichtung 14 vorgesehen sein kann, die über abgespeicherte oder gemessene Werte Transportgeschwindigkeiten V1, V2 in Abhängigkeit von der Plattenlänge L einstellen und im richtigen Augenblick die Leiteinrichtung 9 aktivieren. Dazu sind die Steuerleitungen 15 angedeutet.

Fig. 4 zeigt eine schematische Draufsicht auf die erste Transportvorrichtung 2 und die zweite Transportvorrichtung 3. Die erste Transportvorrichtung 2 besitzt drei parallele Förderbänder 2.1, die mit der Geschwindigkeit V1 betrieben werden. Die zweite Transportvorrichtung 3 hat zwei Förderbänder 3.1, die sich zwischen den Förderbändern 2.1 befinden. Alle Förderbänder 2.1, 3.1 laufen über Umlenkwalzen 5, die hier nur symbolisch mit ihrer Mittelachse dargestellt sind. Der Antrieb der Förderbänder 2.1 muss aber unabhängig von dem Antrieb der Förderbänder 3.1 erfolgen können und mit unterschiedlichen Geschwindigkeiten V1, V2 darstellbar sein. Das zweite Förderband 3 besitzt ferner eine Mehrzahl von aktivierbaren Tragelementen 6, damit eine Holzfaserplatte 10.x auf einer anderen Transporthöhe geführt werden kann. Damit sind in einer Transportstrecke S mindestens zwei Holzfaserplatten mit unterschiedlichen Geschwindigkeiten transportierbar.

### Bezugszeichen:

- 1: Transportanordnung
- 2: Erste Transportvorrichtung
- 2.1: Transportband der ersten Transportvorrichtung
- 3: Zweite Transportvorrichtung
- 3.1: Transportband der zweiten Transportvorrichtung
- 4: Weitere Transporteinrichtung
- 4.1, 4.2: Transportband der weiteren Transporteinrichtung
- 5: Umlenkwalzen
- 6: Tragelement
- 7: Stapelposition
- 8: Faserplattenstapel
- 9: Leiteinrichtung
- 10.1, 10.2, 10.3: Holzfaserplatte
- 11: Hebel
- 12: Andruckelement
- 13: Andruckrolle
- 14: Steuer- oder Regelvorrichtung
- 15: Steuerleitungen
- V1: Geschwindigkeit des ersten Transportbandes v
- V2: Geschwindigkeit des zweiten Transportbandes v2
- L: Plattenlänge
- T1: Transporthöhe 1
- T2: Transporthöhe 2
- S: Transportstrecke

## Patentansprüche

1. Transportanordnung für Holzfaserplatten (10.1, 10.2, 10.3) mit zumindest einer ersten Transportvorrichtung (2) für den liegenden Transport von teilweise übereinanderliegenden Holzfaserplatten (10.1, 10.2, 10.3) über eine Transportstrecke S in einer ersten Transporthöhe (T1), und einer Stapelposition für Holzfaserplatten (10.1, 10.2, 10.3) in Transportrichtung hinter der ersten Transportvorrichtung (2), wobei
wenigstens eine zweite Transportvorrichtung (3) vorgesehen ist, **dadurch gekennzeichnet, dass** die zweite Transportvorrichtung geeignet ist, innerhalb der Transportstrecke (S) der ersten Transportvorrichtung (2) Holzfaserplatten (10.1, 10.2, 10.3) auf einer zweiten Transporthöhe (T2) zu transportieren,
und, dass die zweite Transportvorrichtung (3) Tragelemente (6) aufweist, die auf einem Teilstück der Transportstrecke (S) derart aktivierbar sind, dass eine sich in der Transportstrecke (S) befindliche Holzfaserplatte über die aktivierten Tragelemente (6) auf ein höheres Transportniveau (T2) angehoben wird, indem die Tragelemente (6) durch Vorlauf der zweiten Transportvorrichtung (3) unter die Holzfaserplatte gebracht wurden.

2. Transportanordnung gemäß Anspruch 1, **dadurch gekennzeichnet, dass** die erste Transportvorrichtung (2) und die zweite Transportvorrichtung (3) mit unterschiedlichen Transportgeschwindigkeiten (V1, V2) betreibbar sind.

3. Transportanordnung gemäß Anspruch 1 oder 2, **dadurch gekennzeichnet, dass** die erste Transportvorrichtung (2) und/oder die zweite Transportvorrichtung (3) wenigstens ein umlaufendes Transportband (2.1, 3.1) aufweisen.

4. Transportanordnung gemäß einem der Ansprüche 1 bis 3, **dadurch gekennzeichnet, dass** die erste Transportvorrichtung (2) wenigstens ein umlaufendes Transportband (2.1) und die zweite Transportvorrichtung (3) wenigstens ein umlaufendes Transportband (3.1) aufweisen, die nebeneinander angeordnet sind.

5. Transportanordnung gemäß einem der Ansprüche 1 bis 4, **dadurch gekennzeichnet, dass** die Tragelemente (6) auf dem Teilumfang wenigstens eines Transportbandes (2.1, 3.1) angebracht sind

6. Transportanordnung gemäß Anspruch 2 bis 5, **dadurch gekennzeichnet, dass** eine Steuer- oder Regelvorrichtung (14) vorgesehen ist, mit der die Transportgeschwindigkeit (V1) der ersten Transportvorrichtung (2) und die Transportgeschwindigkeit (V2) der zweiten Transportvorrichtung (3) einstellbar sind.

7. Transportanordnung gemäß einem der Ansprüche 2 bis 6, **dadurch gekennzeichnet, dass** durch eine Steuer- oder Regelvorrichtung (14) die Einstellung der Transportgeschwindigkeiten (V1, V2) und/oder die Aktivierung der Tragelemente in Abhängigkeit von zu erzeugenden Zwischenräumen zwischen den Holzfaserplatten (10.2, 10.3) einstellbar sind.

8. Verfahren zum Transportieren von teilweise übereinanderliegenden Holzfaserplatten (10.1, 10.2, 10.3) auf zumindest einer ersten Transportvorrichtung (2) über eine Transportstrecke (S) in einer ersten Transporthöhe (T1) und Zuführen der einzelnen Holzfaserplatten (10.1, 10.2, 10.3) zu einer Stapelposition (7), wobei
eine oder mehrere Holzfaserplatten (10.2) innerhalb der Transportstrecke (S) der ersten Transportvorrichtung (2) von einer zweiten Transportvorrichtung (3) auf einer Transporthöhe (T2) getragen werden,
**dadurch gekennzeichnet, dass**
die zweite Transportvorrichtung (3) Tragelemente (6) aufweist, die auf einem Teilstück der Transportstrecke (S) derart aktiviert werden, dass eine sich in der Transportstrecke (S) befindliche Holzfaserplatte über die aktivierten Tragelemente (6) auf ein höheres Transportniveau (T2) angehoben wird, indem die Tragelemente (6) durch Vorlauf der zweiten Transportvorrichtung (3) unter die Holzfaserplatte gebracht wurden.

9. Verfahren gemäß Anspruch 8, **dadurch gekennzeichnet, dass** die erste Transportvorrichtung (2) und die zweite Transportvorrichtung (3) mit unterschiedlichen Transportgeschwindigkeiten (V1, V2) betrieben werden.

10. Verfahren gemäß Anspruch 9, **dadurch gekennzeichnet, dass** die unterschiedlichen Transportgeschwindigkeiten (V1, V2) einen Abstand zwischen zwei aufeinanderfolgenden, vormals teilweise übereinanderliegenden Holzfaserplatten erzeugen.

11. Verfahren gemäß Anspruch 9 oder 10, **dadurch gekennzeichnet, dass** die Geschwindigkeitsdifferenz aufgrund eines Längenmaßes und/oder der Überlappung zweier Holzfaserplatten (10.1, 10.2, 10.3) eingestellt wird

12. Verfahren gemäß Anspruch 11, **dadurch gekennzeichnet, dass** die Einstellung aufgrund von in einer Steuerung hinterlegter Daten und Abhängigkeiten von Transportgeschwindigkeit und Plattenlänge erfolgt.

13. Verfahren gemäß einem der Ansprüche 10 bis 12, **dadurch gekennzeichnet, dass** eine Leiteinrichtung (9) für Holzfaserplatten (10.1, 10.2, 10.3) in den erzeugten Abstand zwischen zwei Holzfaserplatten einfährt.

## Claims

1. Transport assembly for wood fibre boards (10.1, 10.2, 10.3) with at least one first transporting device (2) for the horizontal transportation of wood fibre boards (10.1, 10.2, 10.3) that are partly lying on top of each other along a transporting route S at a first transporting height (T1), and a stacking position for wood fibre boards (10.1, 10.2, 10.3) in a transporting direction behind the first transporting device (2) wherein
at least one second transporting device (3) is provided, **characterised in that** the second transporting device is suitable for transporting wood fibre boards (10.1, 10.2, 10.3) at a second transporting height (T2) within the transporting route (S),
and **in that**
the second transporting device (3) comprises carrier elements (6) which can be activated on a portion of the transporting route (S) in such a way that a wood fibre board located in the transporting route (6) is lifted to a higher transporting level (T2) **in that** the carrier elements (6) have been positioned under the wood fibre board by way of the second transporting device (3) moving forwards.

2. Transport assembly according to claim 1, **characterised in that** the first transporting device (2) and the second transporting device (3) can be operated with different transporting speeds (V1, V2).

3. Transport assembly according to claim 1 or 2 **characterised in that** the first transporting device (2) and/or the second transporting device (3) comprise(s) at least one circumferential transporting belt (2.1, 3.1).

4. Transport assembly according to any one of claims 1 to 3 **characterised in that** the first transporting device (2) comprises at least one circumferential transporting belt (2.1) and the second transporting device (3) at least one circumferential belt (3.1) that are arranged next to each other.

5. Transport assembly according to any one of claims 1 to 4, **characterised in that** the carrier elements (6) are applied on the partial circumference of at least one transporting belt (2.1, 3.1).

6. Transport assembly according to claim 2 to 5, **characterised in that** a control or regulating device (14) is provided, with which the transporting speed (V1) of the first transporting device (2) and the transporting speed (V2) of the second transporting device (3) can be adjusted.

7. Transport assembly according to any one of claims 2 to 6, **characterised in that** by means of the control or regulating device (14) the setting of the transporting speeds (V1, V2) and/or the activation of the carrier elements can be adjusted as a function of the intermediate spaces to be produced between the wood fibre boards (10.2, 10.3).

8. Method of transporting wood fibre boards (10.1, 10.2, 10.3) that are partially lying on top of each other on at least one first transporting device (2), along a first transporting route (S) at a first transporting height (T1) and supplying the individual wood fibre boards (10.1, 10.2, 10.3) to a stacking position, wherein
one or more wood fibre boards (10.2) are carried within the transporting route (S) of first transporting device (2) by a second transporting device (3) at a transporting height (T2),
**characterised in that**
the second transporting device (3) comprises carrier elements (6) which are activated on a portion of the transporting route (S) in such a way that a wood fibre board located in the transporting route (S) is lifted by way of the activated carrier elements (6) to a higher transporting level (T2) **in that** the carrier elements (6) have been positioned under the wood fibre board by way of the second transporting device (3) moving forwards.

9. Method according to claims 8, **characterised in that** the first transporting device (2) and the second transporting device (3) are operated with different transporting speeds (V1, V2).

10. Method according to claim 9, **characterised in that** the different transporting speeds (V1, V2) produce a spacing between two consecutive wood fibre boards that were previously partially lying on top of each other.

11. Method according to claim 9 or 10, **characterised in that** the difference in speed is adjusted on the basis of a length and/or the overlapping of two wood fibre boards (10.1, 10.2, 10.3).

12. Method according to claim 11, **characterised in that** adjustment takes place on the basis of data stored in a controller and in dependence on transporting speed and board length.

13. Method according to any one of claims 10 to 12, **characterised in that** a guiding device (9) for wood fibre boards (10.1, 10.2, 10.3) moves into the space produced between two wood fibre boards.

## Revendications

1. Système de transport pour panneaux de fibres de bois (10.1, 10.2, 10.3) avec au moins un premier dispositif de transport (2) pour le transport à plat de panneaux de fibres de bois (10.1, 10.2, 10.3 en partie superposés sur une voie de transport (S) à une première hauteur de transport (T1) et dans une position d'empilage pour les panneaux de fibres de bois (10.1, 10.2, 10.3) dans une direction de transport derrière le premier dispositif de transport (2), sachant qu'au moins un deuxième dispositif de transport (3) est prévu, **caractérisé en ce que** le deuxième dispositif de transport (3) est adapté pour transporter des panneaux de fibres de bois (10.1, 10.2, 10.3) à une deuxième hauteur de transport (T2) à l'intérieur de la voie de transport (S) du premier dispositif de transport (2)
et **en ce que** le deuxième dispositif de transport (3) comporte des éléments de support (6) qui peuvent être activés sur une partie de la voie de transport (S) de telle manière qu'un panneau de fibres de bois se trouvant dans la voie de transport (S) est relevé par les éléments de support (6) activés à un niveau de transport plus élevé (T2), les éléments de support (6) ayant été placés sous le panneau de fibres de bois par l'avance du deuxième dispositif de transport (3).

2. Système de transport selon la revendication 1, **caractérisé en ce que** le premier dispositif de transport (2) et le deuxième dispositif de transport (3) peuvent être actionnés à des vitesses de transport différentes (V1, V2).

3. Système de transport selon la revendication 1 ou 2, **caractérisé en ce que** le premier dispositif de transport (2) et/ou le deuxième dispositif de transport (3) comportent au moins une bande transporteuse circulante continue (2.1, 3.1).

4. Système de transport selon l'une quelconque des revendications 1 à 3, **caractérisé en ce que** le premier dispositif de transport (2) comporte au moins une bande transporteuse circulante continue (2.1) et le deuxième dispositif de transport (3) comporte au moins une bande transporteuse circulante continue (3.1), qui sont disposées l'une à côté de l'autre.

5. Système de transport selon l'une quelconque des revendications 1 à 4, **caractérisé en ce que** les éléments de support (6) sont placés sur une partie périphérique d'au moins une bande transporteuse (2.1, 3.1).

6. Système de transport selon l'une quelconque des revendications 2 à 5, **caractérisé en ce qu'**un dispositif de commande ou de régulation (14) est prévu avec lequel la vitesse de transport (V1) du premier dispositif de transport (2) et la vitesse de transport (V2) du deuxième dispositif de transport (3) peuvent être réglées.

7. Système de transport selon l'une quelconque des revendications 2 à 6, **caractérisé en ce que** le réglage des vitesses de transport (V1, V2) et/ou l'activation des éléments de support peuvent être mis au point en fonction des espaces intermédiaires à produire entre les panneaux de fibres de bois (10.2, 10.3) par un dispositif de commande ou de régulation (14).

8. Procédé de transport de panneaux de fibres de bois (10.1, 10.2, 10.3) en partie superposés sur au moins un premier dispositif de transport (2) sur une voie de transport (S) à une première hauteur de transport (T1) et d'acheminement des panneaux de fibres de bois individuels (10.1, 10.2, 10.3) vers une position d'empilage (7), sachant qu'un ou plusieurs panneaux de fibres de bois (10.2) sont portés par un deuxième dispositif de transport (3) à une hauteur de transport (T2) à l'intérieur de la voie de transport (S) du premier dispositif de transport (2),
**caractérisé en ce que**
le deuxième dispositif de transport (3) comporte des éléments de support (6), qui sont activés sur une partie de la voie de transport (S) de telle manière qu'un panneau de fibres de bois se trouvant dans la voie de transport (S) est relevé par le biais des éléments de support (6) à un niveau de transport plus élevé (T2), les éléments de support (6) ayant été placés sous le panneau de fibres de bois par l'avance du deuxième dispositif de transport (3).

9. Procédé selon la revendication 8, **caractérisé en ce que** le premier dispositif de transport (2) et le deuxième dispositif de transport (3) sont actionnés à des vitesses de transport différentes (V1, V2).

10. Procédé selon la revendication 9, **caractérisé en ce que** les vitesses de transport différentes (V1, V2) génèrent un espace entre deux panneaux de fibres de bois se succédant, en partie précédemment superposés.

11. Procédé selon la revendication 9 ou 10, **caractérisé en ce que** la différence de vitesse est réglée sur la base d'une cote de longueur et/ou du chevauchement de deux panneaux de fibres de bois (10.1, 10.2, 10.3).

12. Procédé selon la revendication 11, **caractérisé en ce que** le réglage a lieu sur la base des données mémorisées dans une commande et en fonction de la vitesse de transport et de la longueur de panneau.

13. Procédé selon l'une quelconque des revendications 10 à 12, **caractérisé en ce qu'un** dispositif de guidage (9) pour les panneaux en fibres de bois (10.1, 10.2, 10.3) pénètre dans l'espace produit entre deux panneaux de fibres de bois.
